# DEMANDE DE BREVET EUROPEEN

(11) **EP 4 818 645 A1**
(43) Date de publication de la demande: **07.10.2026**
(21) Numéro de dépôt: 26163907.4
(22) Date de dépôt: 11.03.2026
(51) Int. Cl.: G01C 23/00, G08G 5/54, B64D 45/08

(54) **AERONEF ET PROCÉDÉ D'AIDE AU PILOTAGE POUR ATTERRIR EN CONDITIONS DE VISIBILITÉ DEGRADÉE**

(30) Priorité: 31.03.2025 FR 2503148
(71) Demandeur: Airbus Helicopters, 13725 Marignane Cedex (FR)
(72) Inventeur: BLAISE, Jérémy, 13090 AIX EN PROVENCE (FR); BAUDRY, Jean-Pierre, 83200 TOULON (FR)
(74) Mandataire: GPI Brevets

(57) **Abrégé**

La présente invention concerne un procédé d'aide au pilotage pour atterrir sur une zone cible (100) centrée sur un point de posé (101) avec un aéronef (1). Le procédé comporte la détermination d'une aire d'atterrissage principale virtuelle (40) positionnée sur la zone cible (100), ladite aire d'atterrissage principale virtuelle (40) comprenant au moins quatre symboles principaux (45) convergeant vers ledit point de posé (101), un ou deux symboles principaux (45) situés dans un plan vertical (PVT) contenant une pente (85) formant respectivement un ou deux symboles d'alignement (400), chaque symbole principal (45) ne formant pas un symbole d'alignement (400) étant un symbole radial (401), ledit au moins un symbole d'alignement (400) étant affiché selon une première charte graphique, chaque symbole radial (401) étant affiché selon une deuxième charte graphique différente de la première charte graphique.

## Description

La présente invention concerne un aéronef et un procédé d'aide au pilotage pour atterrir en conditions de visibilité dégradée, et en particulier un aéronef muni d'une voilure tournante.

Lors d'un atterrissage, le souffle produit par la rotation de la voilure tournante peut soulever de manière soudaine et à proximité du sol des particules présentes sur le sol. Ces particules peuvent former un nuage qui aveugle subitement le pilote en réduisant la visibilité de l'environnement à l'extérieur du cockpit. En particulier, lorsque l'aéronef doit se poser sur une zone sablonneuse, poussiéreuse (terrains secs) ou enneigée, un nuage de sable ou de neige peut envelopper l'aéronef et peut obscurcir le champ de vision d'un pilote vers l'extérieur du cockpit. Un tel phénomène est dénommé parfois en langue anglaise « brown-out » en présence de sable ou de poussière et « white-out » en présence de neige.

Bien qu'un pilote y soit préparé, un pilote est parfois surpris au moment de l'apparition de particules qui obscurcissent de façon soudaine et inopinée son champ de vision à l'extérieur du cockpit. Le pilote risque alors de perdre ses références visuelles et peut engager une manœuvre inadéquate.

Les documents WO2009/081177 et EP 3 217 148 décrivent un procédé pour faciliter un atterrissage. Ce procédé comporte les étapes de détermination du point d'atterrissage souhaité en fonction de la ligne de vision d'un pilote, de détermination de l'emplacement du point d'atterrissage par rapport à l'aéronef, de génération d'affichage et de mise à jour de symboles sur un écran. Ces symboles comportent un unique cercle, un sigle en forme de « H » et une pluralité de cônes, chaque cône comprenant une base reposant sur le cercle et des disques représentant diverses hauteurs. Par exemple, quatre cônes sont placés sur le cercle au niveau des quatre points cardinaux, quatre autres cônes sont placés entre les quatre cônes précédents.

Un nombre excessif de symboles peut saturer la vision d'un pilote sur l'écran.

Le document WO2005/015333 décrit un système comprenant des senseurs recevant des informations relatives à des conditions environnementales et une unité de traitement qui traite ces informations pour assister un pilote.

Le document EP 2 116 811 est éloigné de l'invention en ayant pour objet un système de guidage d'avion.

Le document FR 3 083 779 décrit un procédé d'aide au pilotage qui comprend des étapes de désignation d'un point de posé et de détermination d'un axe de visée. Un unique symbole en trois dimensions fournissant une position conforme du point de posé est affiché sur un écran, ledit symbole en trois dimensions s'étendant en élévation du sol vers le haut d'une zone inférieure positionnée sur le sol jusqu'à une zone sommitale positionnée à une hauteur dite « hauteur de sommet » par rapport au sol. Au moins un symbole en deux dimensions couvrant une zone cible est affiché lorsque l'aéronef est situé à une distance inférieure à une première distance seuil. Ce symbole en deux dimensions représente une aire d'atterrissage virtuelle et comporte des cercles ainsi que des radiales.

Le document FR 3 134 176 décrit l'affichage sur un écran d'une représentation tant qu'un aéronef est situé à une distance horizontale d'un point de posé inférieure à un premier seuil. La représentation comprend un symbole d'aéronef représentant ledit aéronef, un symbole cible représentant le point de posé, un symbole de déplacement image du déplacement relatif de l'aéronef par rapport au point de posé ainsi qu'un symbole en élévation illustrant la hauteur de l'aéronef par rapport au point de posé, ledit symbole en élévation comprenant une marque séparée du symbole cible par une distance en élévation image de ladite hauteur.

Les documents EP 4 181 104 A1 et US 2021/0366294 A1 sont aussi connus.

La présente invention a alors pour objet de proposer un procédé intuitif pour aider le pilote à visualiser et atteindre une aire d'atterrissage éventuellement non préparée, notamment en présence de particules qui obscurcissent sa vision de l'environnement hors du cockpit.

L'invention vise ainsi un procédé d'aide au pilotage pour atterrir sur une zone cible centrée sur un point de posé avec un aéronef.

Le procédé comporte les étapes suivantes :
- détermination avec un calculateur embarqué d'une pente d'approche dirigée vers la zone cible,
- détermination avec le calculateur embarqué d'une aire d'atterrissage principale virtuelle positionnée, au sein d'une représentation du monde réel, sur la zone cible, ladite aire d'atterrissage principale virtuelle comprenant éventuellement, plusieurs lignes principales fermées et imbriquées les unes dans les autres, les lignes principales étant centrées chacune sur le point de posé et positionnées à l'altitude du sol, ladite aire d'atterrissage principale virtuelle comprenant au moins quatre symboles principaux convergeant vers ledit point de posé, un ou deux symboles principaux situés dans un plan vertical contenant ladite pente formant respectivement un ou deux symboles d'alignement, chaque symbole principal ne formant pas un symbole d'alignement étant un symbole radial,
- affichage sur un afficheur d'au moins une partie virtuelle de l'aire d'atterrissage principale virtuelle, par exemple tant que ladite partie virtuelle est dans un champ de vision d'un pilote de l'aéronef, ledit au moins un symbole d'alignement étant affiché selon une première charte graphique, chaque symbole radial étant affiché selon une deuxième charte graphique différente de la première charte graphique.

Par exemple, lesdits symboles principaux prennent la forme de segments, de triangles pointant vers le point de posé, de flèches, etc.

A proximité de la zone de posé, en l'absence de repères visuels extérieurs un pilote peut perdre de vue l'axe de l'approche, à savoir la direction de la pente conseillée. Le pilote peut alors être désorienté.

Le procédé permet de remédier à ce problème en distinguant visuellement les symboles d'alignement disposés selon cet axe d'approche. Cette caractéristique permet de signaler facilement l'axe d'approche à un pilote pour limiter les risques de dérive en lacet et/ou de dérapage.

Le procédé peut de plus comporter une ou plusieurs des caractéristiques qui suivent, prises seules ou en combinaison.

Ainsi, ledit affichage peut être réalisé tant que l'aéronef est situé à une distance horizontale dudit point de posé inférieure à un seuil de transition.

L'aire d'atterrissage virtuel est alors uniquement signalée en fin d'approche pour ne pas surcharger l'afficheur au début de l'approche.

Selon une possibilité compatible avec les précédentes, ledit au moins un symbole d'alignement peut présenter selon la première charte graphique une première épaisseur, chaque symbole radial ayant selon la deuxième charte graphique une deuxième épaisseur différente de la première épaisseur.

Cette caractéristique permet par exemple de distinguer les symboles d'alignement des symboles radiaux sur un afficheur monochrome.

Selon une possibilité compatible avec les précédentes, la première épaisseur peut être supérieure à la deuxième épaisseur.

Selon une possibilité compatible avec les précédentes, la première épaisseur peut être égale à trois fois la deuxième épaisseur.

Selon une possibilité compatible avec les précédentes ledit au moins un symbole d'alignement peut présenter selon la première charte graphique un premier style de trait, chaque symbole radial ayant selon la deuxième charte graphique un deuxième style de trait différent du premier style de trait.

Cette caractéristique permet par exemple de distinguer les symboles d'alignement des symboles radiaux sur un afficheur monochrome.

Eventuellement le premier style de trait et le deuxième style de trait peuvent être choisis dans une liste comprenant : un trait continu, un trait discontinu, des pointillés.

Selon une possibilité compatible avec les précédentes, ledit au moins un symbole d'alignement peut présenter selon la première charte graphique une première couleur, chaque symbole radial ayant selon la deuxième charte graphique une deuxième couleur différente de la première couleur.

Cette caractéristique permet par exemple de distinguer les symboles d'alignement des symboles radiaux sur un afficheur couleur.

Selon une possibilité compatible avec les précédentes le procédé peut comporter une détermination du sens du vent, ladite pente étant disposée face au vent.

Selon une possibilité compatible avec les précédentes, le procédé peut comporter une détermination d'au moins un danger avec au moins une base de données de terrain ou un système de détection d'obstacles, ladite pente étant disposée pour éviter ledit danger.

Par exemple, le calculateur embarqué ou un générateur de trajectoire usuel en communication avec le calculateur embarqué peut établir ladite pente
Selon une possibilité compatible avec les précédentes, ladite pente peut être dirigée vers le point de posé.

Cette caractéristique permet par exemple de diriger directement l'aéronef vers le point de posé
Selon une possibilité compatible avec les précédentes, ladite pente peut être dirigée vers un point situé au-dessus du point de posé.

Cette caractéristique permet par exemple de diriger directement l'aéronef au-dessus du point de posé, pour lui permettre de simplement descendre vers le point de posé lors de la dernière phase de l'atterrissage. En outre, cette caractéristique peut faciliter l'emploi du procédé décrit dans le brevet FR 3 134 176.

Outre un procédé, l'invention vise un aéronef muni d'un afficheur et d'un calculateur embarqué.

L'afficheur et ledit calculateur embarqué sont configurés pour appliquer le procédé de l'invention, ledit calculateur embarqué étant configuré pour déterminer ladite pente et l'aire d'atterrissage principale virtuelle et ledit afficheur étant configuré pour afficher ladite au moins une partie virtuelle.

L'invention et ses avantages apparaîtront avec plus de détails dans le cadre de la description qui suit avec des exemples donnés à titre illustratif en référence aux figures annexées qui représentent :
la figure 1, un schéma illustrant un aéronef selon l'invention,
la figure 2, un schéma illustrant divers symboles affichables sur un afficheur selon l'invention,
la figure 3, un schéma illustrant la désignation d'un point de posé,
la figure 4, un schéma illustrant une phase d'approche,
la figure 5, un schéma illustrant une phase d'approche,
la figure 6, un schéma illustrant une phase d'approche,
la figure 7, un schéma illustrant un exemple d'initiation d'une phase de mise en vol stationnaire au-dessus du point de posé,
la figure 8, un schéma illustrant un exemple d'initiation d'une phase de mise en vol stationnaire au-dessus du point de posé,
la figure 9, un schéma illustrant un aéronef s'approchant du point de posé,
la figure 10, un schéma illustrant l'affichage d'une aire d'atterrissage complémentaire virtuelle lorsque l'aéronef atteint la position illustrée sur la figure 9,
la figure 11, un schéma illustrant l'affichage de lignes complémentaires lorsque l'aire d'atterrissage principale virtuelle n'est plus dans le champ de vision du pilote,
la figure 12, un schéma illustrant la phase de mise en vol stationnaire à proximité du point de posé avec un symbole de déplacement porteur d'une position prédite,
la figure 13, un diagramme illustrant la variation de la vitesse par rapport au coefficient aérodynamique de traînée, et,
la figure 14, un diagramme illustrant la variation d'incidence par rapport au coefficient aérodynamique de traînée.

Les éléments présents dans plusieurs figures distinctes sont affectés d'une seule et même référence.

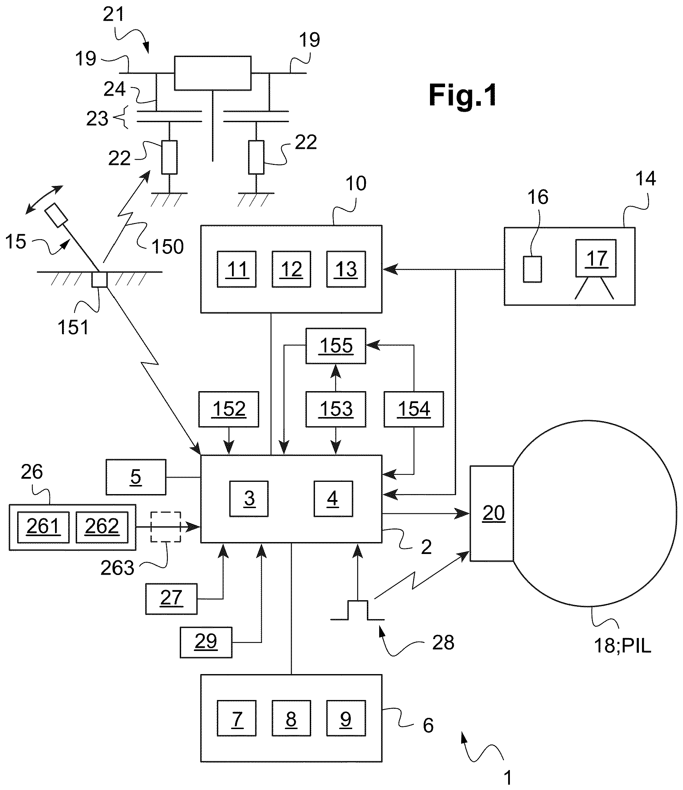

La figure 1 présente un aéronef 1 selon l'invention configuré pour pouvoir appliquer le procédé de l'invention. Cet aéronef 1 peut notamment être un aéronef apte à se poser sur une zone de surface réduite. L'aéronef 1 est notamment muni d'organes de manœuvre 22 permettant de le diriger, tels que des servocommandes ou des bielles ou équivalents pilotant des volets ou le pas de pales par exemple. L'aéronef 1 peut comprendre des réacteurs ou des rotors permettant un atterrissage vertical ou sensiblement vertical.

Selon l'exemple de la figure 1, l'aéronef 1 peut être un hélicoptère ayant au moins un rotor principal 21 muni de pales 19.

Le pas des pales 19 est par exemple commandé par des interfaces usuelles. Le terme « interface » désigne un organe pouvant être sollicité par un pilote. Par exemple, l'aéronef 1 comporte une interface homme-machine de pas collectif 15, tel un levier de pas collectif conventionnel. Une telle interface homme-machine de pas collectif 15 pilote alors selon l'exemple illustré des actionneurs formant les organes de manœuvre 22, via un système mécanique ou électrique 150, les actionneurs pouvant déplacer un dispositif à plateaux cycliques 23 connecté par au moins une bielle de pas 24 à chaque pale 19.

Indépendamment de la nature de l'aéronef 1 et de ces organes de manœuvre 22, l'aéronef 1 comporte un calculateur embarqué 2. Le calculateur embarqué 2 peut comprendre un ou plusieurs calculateurs, une ou plusieurs cartes électroniques... Le calculateur embarqué 2 peut comprendre par exemple au moins un processeur 3 et au moins une mémoire 4, au moins un circuit intégré, au moins un système programmable, au moins un circuit logique, ces exemples ne limitant pas la portée donnée à l'expression « calculateur embarqué ».

Le calculateur embarqué 2 peut communiquer par une liaison filaire ou non filaire avec un senseur de position 6. Un tel senseur de position 6 transmet au calculateur embarqué 2 une information relative à la position de l'aéronef 1 dans l'espace, par exemple par rapport à un référentiel terrestre et/ou à une zone de posé. Par exemple, un tel senseur de position 6 peut comprendre un système de positionnement par satellites 7 et/ou une radiosonde 8 et/ou un radar 9 ou équivalent, et/ou un système optique et/ou une centrale inertielle...

Le calculateur embarqué 2 peut communiquer par une liaison filaire ou non filaire avec un senseur de vitesse 5 pour obtenir une information relative à une vitesse d'avancement de l'aéronef 1 voire pour déterminer le vecteur vitesse 105 de l'aéronef 1. Un tel senseur de vitesse 5 peut comprendre un système de positionnement par satellites, un capteur anémométrique, une centrale inertielle...

Par ailleurs, le calculateur embarqué 2 peut communiquer par une liaison filaire ou non filaire avec un désignateur 10 apte à désigner un point de posé. De manière générale, le désignateur 10 peut comprendre tout organe permettant de paramétrer les coordonnées d'un point de posé, par exemple dans le référentiel terrestre.

Un tel désignateur 10 peut comprendre par exemple un organe 11 embarqué manœuvrable par un pilote, tel qu'un bouton ou équivalent, permettant à un pilote de désigner un point de posé en passant au-dessus de ce point de posé ou encore de désigner le point de posé sur un outil cartographique via une interface homme-machine comme un moyen tactile, visuel, gestuel ou autre. Le désignateur 10 peut comprendre un organe 12 embarqué de saisie de caractères manœuvrable par un pilote, tel qu'un clavier ou une souris par exemple, permettant une saisie numérique des coordonnées du point de posé. Le désignateur 10 peut comprendre un récepteur de données 13 permettant de recevoir les coordonnées du point de posé transmises par un tiers avec un émetteur distant, par exemple un tiers présent au sol ou dans un autre aéronef 1. Selon d'autres exemples, le désignateur 10 peut comprendre un système laser, un système traquant la ligne de vision d'un pilote du type connu sous l'expression anglaise « Eye Tracker » ...

Par ailleurs, l'aéronef 1 peut embarquer un détecteur de posture 14 usuel déterminant le champ de vision d'un pilote. Ce détecteur de posture 14 peut par exemple comprendre au moins une caméra 17 et un calculateur d'imagerie 16. Ce détecteur de posture 14 peut notamment servir de désignateur et peut transmettre au calculateur embarqué 2 une information relative au champ de vision du pilote. Selon la variante, le calculateur embarqué 2 détermine le champ de vision du pilote à partir d'une posture transmise par le calculateur d'imagerie 16 ou le détecteur de posture 14 transmet les coordonnées de la ligne de vision au calculateur embarqué 2. Par exemple, le champ de vision peut être défini par une ellipse construite à partir du champ de vision vertical et du champ de vision horizontal centrés sur une ligne de vision suivie par le regard du pilote. Un champ de vision réduit peut de plus être calculé pour afficher des symboles avant que d'autres symboles disparaissent. Des méthodes usuelles peuvent être employées pour déterminer le champ de vision du pilote.

Par ailleurs, l'aéronef 1 comporte au moins un afficheur 20 affichant une symbologie à caractère technique particulière pour permettre d'atterrir sur une zone cible. Le calculateur embarqué 2 est configuré pour déterminer cette symbologie, et pour transmettre des signaux à l'afficheur 20 pour l'affichage de cette symbologie. Par exemple, le calculateur embarqué 2 comporte un calculateur déterminant les valeurs des paramètres utilisés et un calculateur générateur de symboles, ou un même calculateur remplissant ces deux fonctions.

Un tel afficheur 20 peut être par exemple un écran d'un instrument tête basse, un écran tête haute par exemple du type d'un écran d'un casque 18 porté par un pilote PIL, d'un moyen de projection rétinien, d'un moyen de projection sur parebrise, ou d'un afficheur tête haute connu sous l'expression anglaise « Head Up display » ou autres. L'afficheur 20 peut être transparent pour afficher des données techniques en superposition du monde réel ou pour afficher une image représentant ce monde réel.

Par ailleurs, le calculateur embarqué 2 peut communiquer par une liaison filaire ou non filaire avec un senseur de masse volumique 26 mesurant une masse volumique rho d'un air ambiant à l'extérieur de l'aéronef 1, le senseur de masse volumique 26 communiquant directement ou indirectement via un système avionique conventionnel avec le calculateur embarqué 2. Un tel senseur de masse volumique peut comprendre un capteur 261 mesurant la température extérieure et un capteur 262 mesurant la pression extérieure, le calculateur embarqué 2 ou un calculateur avionique 263 déterminant la masse volumique de manière usuelle en fonction de la pression extérieure et de la température extérieure.

Par ailleurs, le calculateur embarqué 2 et/ou l'afficheur 20 peuvent communiquer par une liaison filaire ou non filaire avec un senseur d'inclinaison 27 pour mesurer un angle courant, le senseur d'inclinaison 27 communiquant directement ou indirectement avec le calculateur embarqué 2 ou l'afficheur 20. Par exemple, le senseur d'inclinaison 27 peut comprendre un inclinomètre ou une centrale inertielle mesurant un angle d'assiette en tangage.

Par ailleurs, le calculateur embarqué 2 peut communiquer par une liaison filaire ou non filaire, directement ou via un système avionique de l'aéronef 1, avec un senseur de vent 29 permettant d'estimer le sens du vent. Par exemple, le senseur de vent 29 peut comprendre un senseur anémobarométrique ou une liaison avec une station météorologique.

Par ailleurs, le calculateur embarqué 2 peut communiquer par une liaison filaire ou non filaire, directement ou via un système avionique de l'aéronef 1, avec un senseur de hauteur 152. Un tel senseur de hauteur 152 peut prendre la forme d'une radiosonde par exemple.

Par ailleurs, le calculateur embarqué 2 peut communiquer par une liaison filaire ou non filaire, directement ou via un système avionique de l'aéronef 1, avec une base de données de terrain 153.

Par ailleurs, le calculateur embarqué 2 peut communiquer par une liaison filaire ou non filaire, directement ou via un système avionique de l'aéronef 1, avec un système de détection d'obstacles 154 de l'aéronef 1. Un tel système peut par exemple comprendre un système RADAR (correspondant à l'expression anglaise « radio detection and ranging ») ou LIDAR (correspondant à l'expression anglaise « light detection and ranging »).

Par ailleurs, ledit aéronef 1 peut comporter une interface homme-machine d'activation 28 communiquant par une liaison filaire ou non filaire directement ou indirectement avec le calculateur embarqué 2 ou l'afficheur 20.

Par ailleurs, ledit aéronef 1 peut comporter un senseur de pas collectif 151 transmettant, directement ou indirectement, au calculateur embarqué 2 ou à l'afficheur 20, un signal porteur d'une composante de pas collectif des pales 19. Selon l'exemple donné, le senseur de pas collectif 151 peut prendre la forme d'un senseur de position mesurant une position de l'interface homme-machine de pas collectif 15. Selon un autre exemple, une commande de vol peut générer un signal transmis à un système de pilotage usuel, ce système de pilotage formant un tel senseur de pas collectif à même de transmettre au calculateur embarqué 2 la composante de pas collectif requise.

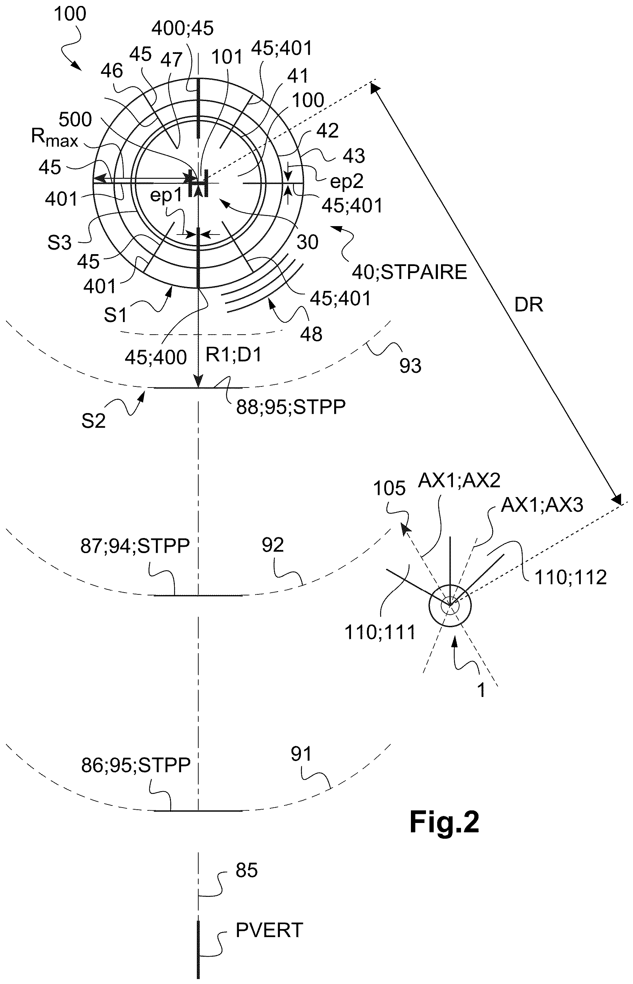

En référence à la figure 2, le calculateur embarqué 2 est configuré pour déterminer les positions, voire les formes, de symboles divers dans l'espace, en permanence ou en fonction d'une distance horizontale DR séparant l'aéronef 1 du point de posé 101, à savoir une distance séparant une projection de l'aéronef 1 dans un plan horizontal contenant le point de posé 101. Par exemple, le calculateur embarqué 2 peut déterminer les positions de symboles illustrant une aire d'atterrissage principale virtuelle 40 positionnée, au sein d'une représentation du monde réel, sur une zone cible 100 à atteindre durant une étape STPAIRE, et/ou des portes de passage 86, 87, 88.

L'aire d'atterrissage principale virtuelle 40 peut comprendre au moins deux, voire trois, lignes principales 41, 42, 43 fermées et imbriquées les unes dans les autres. Chaque ligne principale 41, 42, 43 peut former un cercle et les cercles peuvent être concentriques. Selon un autre exemple, chaque ligne principale 41, 42, 43 peut former un polygone ...

En outre, chaque ligne principale 41, 42, 43 peut être centrée sur le point de posé 101 et positionnée à l'altitude du sol. Dès lors, chaque ligne principale 41, 42, 43 forme un motif en deux dimensions. L'aire d'atterrissage principale virtuelle 40 est positionnée sur la zone cible 100 et contenue dans un cercle, ce cercle présentant un rayon maximal Rmax et étant centré sur le point de posé 101.

Par ailleurs, l'aire d'atterrissage principale virtuelle 40 comprend au moins quatre symboles principaux 45 orientés radialement par rapport au point de posé 101. Par exemple, lesdits symboles principaux 45 prennent la forme de segments, de triangles pointant vers le point de posé, de flèches, etc. A titre illustratif, les figures présentent des symboles principaux de type « segment ».

Eventuellement, les symboles principaux 45 et les lignes principales 41, 42, 43 sont présents dans un même plan. En outre, chaque symbole principal 45 peut s'étendre d'une première extrémité 46 jusqu'à une deuxième extrémité 47. La première extrémité 46 est éventuellement positionnée sur la seule ligne principale 43 qui n'est pas entourée par une autre ligne principale 41, 42. La deuxième extrémité 47 peut éventuellement ne pas atteindre le point de posé 101.

Selon une réalisation illustrée par la suite, les lignes principales 41, 42, 43 forment des cercles concentriques, les symboles principaux 45 s'étendant radialement vers le point de posé 101.

Par ailleurs, l'aire d'atterrissage principale virtuelle 40 peut comprendre une forme 500 centrale, par exemple une forme en H, en X... Cette forme 500 centrale est positionnée sur le point de posé 101 et éventuellement entre les deuxièmes extrémités 47 des symboles principaux 45. L'aire d'atterrissage principale virtuelle 40 peut être complétée dans des conditions évoquées ultérieurement par une aire d'atterrissage complémentaire virtuelle disposée en son centre, la forme 500 centrale pouvant être déplacée. De manière complémentaire, des lignes 48 peuvent former une trace menant vers l'aire d'atterrissage principale virtuelle 40.

En fonction de la position de l'aéronef 1 ou de l'inclinaison de la tête du pilote par exemple, les divers symboles peuvent être affichés en totalité ou partiellement sur l'afficheur 20 en superposition du monde réel dans le cas d'un écran transparent ou éventuellement en superposition d'une illustration du monde réel bâtie à l'aide de la base de données de terrain 153.

Par ailleurs, le calculateur embarqué 2 peut éventuellement calculer les coordonnées de portes de passage 86, 87, 88 matérialisant une pente 85 possible pour rejoindre le point de posé 101. Le calculateur embarqué 2 peut éventuellement calculer les coordonnées d'au moins deux portes de passage 86, 87, 88, par exemple au moins deux ou trois portes de passage dite plus simplement « porte ». Eventuellement, les portes de passage 86, 87, 88 peuvent être parallèles entre elles. Chaque porte de passage 86, 87, 88 peut être tangente à un cylindre centré sur le point de posé 101 ou inclinée par rapport ce cylindre pour être orthogonale à la pente 85 pour s'imbriquer naturellement lors de la descente. Dans ce cas la porte peut être inclinée en étant mise en rotation atour d'une intersection entre la pente et le cylindre. Chaque cylindre peut être de révolution et présenter un rayon égal à une distance prédéterminée D1 multipliée par un nombre entier. Par exemple, la première porte de passage 86 est tangente à un premier cylindre 91 présentant un rayon égal à trois fois la distance prédéterminée D1, la deuxième porte de passage 87 est tangente à un deuxième cylindre 92 présentant un rayon égal à deux fois la distance prédéterminée D1 et une troisième porte de passage 88 est tangente à un troisième cylindre 93 présentant un rayon R1 possiblement égal à la distance prédéterminée D1. La troisième porte de passage 88 représente la porte la plus proche du point de posé 101.

En outre, une porte de passage, et en l'occurrence la deuxième porte de passage 87 selon la figure 2 peut être une porte active 94, les autres portes 86,88 étant des portes inactives 95. La porte active 94 est la porte située selon le cylindre qui est compris entre l'aéronef 1 et le point de posé 101 et le plus proche de l'aéronef 1. La porte active 94 peut avoir une représentation visuelle, au sein de la représentation du monde réel, différente des portes inactives 95. Par exemple, la porte active 94 est dessinée avec des traits plus épais et/ou d'une autre couleur que celle des traits représentant les portes inactives 95.

Par ailleurs, les symboles principaux 45 comprennent un ou deux symboles d'alignements 400 situés dans un plan vertical PVERT contenant ladite pente 85, chaque symbole principal 45 ne formant pas un symbole d'alignement 400 étant un symbole radial 401. Par exemple, deux symboles d'alignement 400 peuvent entourer la forme 500 centrale.

Le ou les symboles d'alignements 400 sont affichés selon une première charte graphique. Les symboles radiaux 401 sont en revanche affichés selon une deuxième charte graphique différente de la première charte graphique. La forme 500 centrale peut être affichée selon une charte graphique dédiée ou identique aux symboles d'alignement par exemple. L'expression « charte graphique » désigne la manière de représenter visuellement le symbole associé. Cette caractéristique permet à un pilote de repérer l'axe de l'approche en cas de dérive en identifiant le ou les symboles d'alignement 400 aisément.

Selon un exemple, le ou les symboles d'alignement 400 ont une première épaisseur ep1 différente d'une deuxième épaisseur ep2 des symboles radiaux 401. Par exemple, la première épaisseur ep1 est supérieure à la deuxième épaisseur ep2, voire est égale à trois fois la deuxième épaisseur ep2. Cette caractéristique peut notamment être intéressante en présence d'un afficheur monochrome.

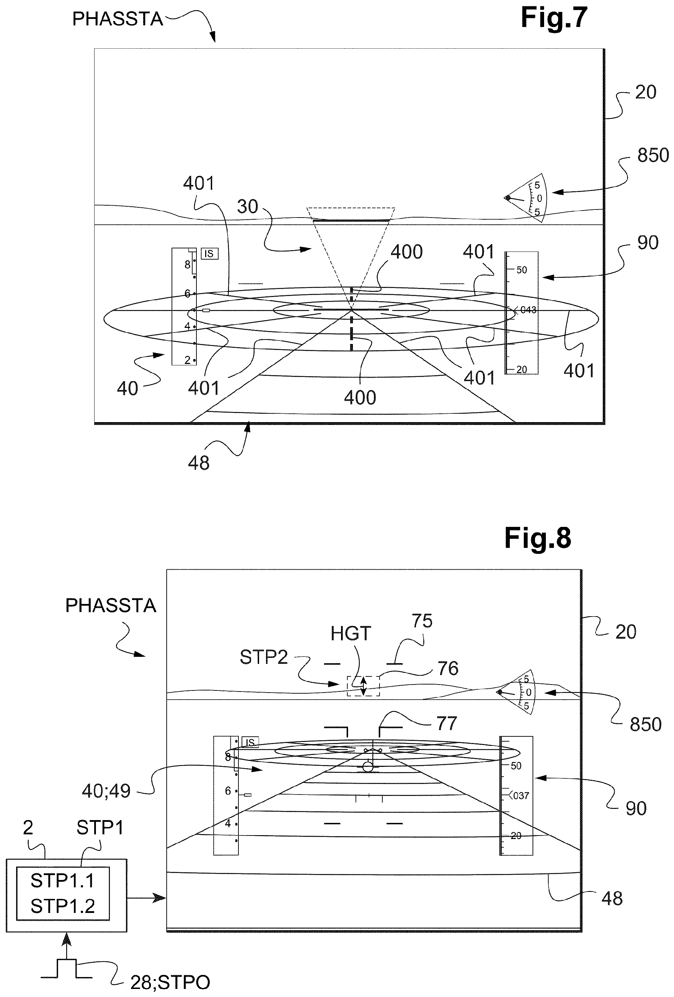

Selon une possibilité complémentaire ou alternative illustrée sur la figure 7 décrite par la suite, les deux symboles d'alignement 400 et les symboles radiaux 401 sont représentés avec des styles de traits différents. Par exemple, les symboles principaux 400 sont représentés avec un premier style de trait et les symboles radiaux 401 sont représentés avec un deuxième style de trait. Eventuellement, le premier style de trait et le deuxième style de trait sont à choisir dans une liste comprenant : un trait continu, un trait discontinu, des pointillés. Cette caractéristique peut notamment être intéressante en présence d'un afficheur monochrome.

Selon une possibilité complémentaire ou alternative, les deux symboles d'alignement 400 ont une couleur différente d'une couleur des symboles radiaux 401.

Selon un autre aspect et en référence à la figure 2, le calculateur embarqué 2 peut déterminer le champ de vision 110, voire un axe de visée AX1 et un champ de vision 110 aligné sur l'axe de visée AX1. Le calculateur embarqué 2 transmet alors un signal à l'afficheur 20 pour afficher la partie éventuelle des symboles précités située à un emplacement correspondant dans le monde réel à un emplacement présent dans le champ de vision 110 en leur conférant la forme vue selon l'axe de visée AX1.

Selon une variante, l'axe de visée AX1 peut être confondu avec un axe de déplacement AX2 aligné selon le vecteur vitesse 105 de l'aéronef 1, déterminé avec le senseur de vitesse 5. Seuls les éléments présents dans ce champ de vision 110 sont alors affichés. La première porte 86 et la deuxième porte 87 ne sont notamment pas affichées selon l'exemple de la figure 2.

Selon une autre variante, l'axe de visée AX1 peut être confondu avec la ligne de vision AX3 du pilote, le champ de vision 110 correspondant alors au champ de vision réel 112 du pilote. Selon l'exemple de la figure 2, aucune partie de l'aire d'atterrissage principale virtuelle 40 et aucune porte 86,87,88 ne sont alors affichées.

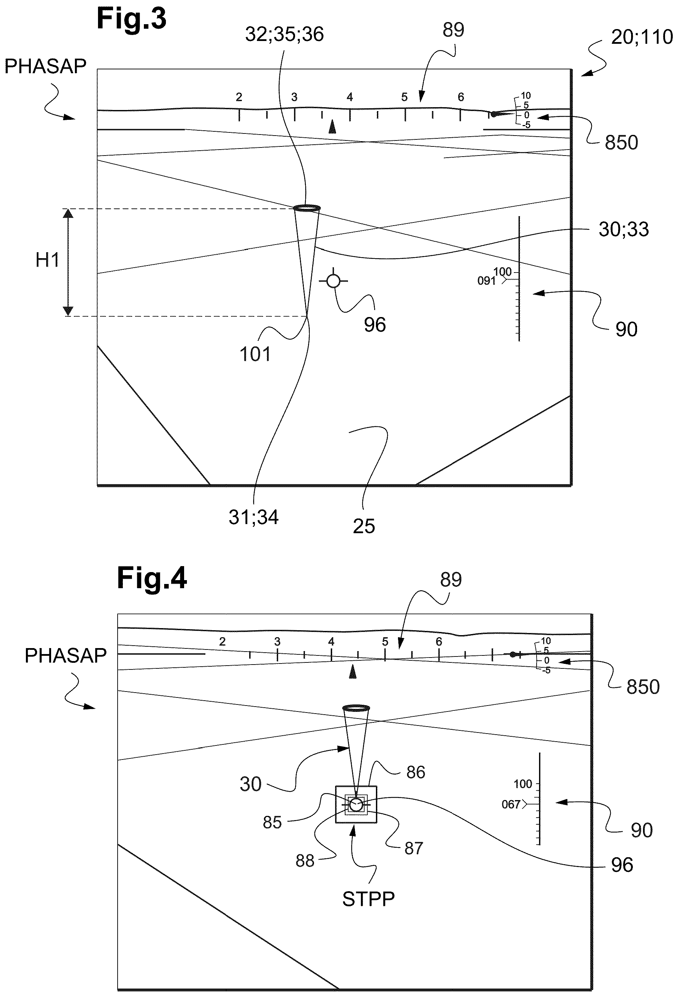

Les figures 3 à 14 illustrent le procédé selon l'invention.

En référence à la figure 3, le procédé peut comporter une phase d'approche PHASAP optionnelle. Cette phase d'approche PHASAP peut comprendre une étape de désignation du point de posé 101 en utilisant le désignateur 10. Le point de posé 101 peut être paramétré par le pilote ou transmis à l'aéronef 1 à partir de l'extérieur de l'aéronef 1.

Le calculateur embarqué 2 estime le champ de vision 110 et peut afficher sur l'afficheur 20, éventuellement en superposition du monde réel ou d'une illustration du monde réel, chaque partie d'un symbole de désignation 30 conforme contenu dans le champ de vision 110. Dès que ledit point de posé 101 est validé, une symbologie dédiée apparait alors sur l'afficheur 20 à la position validée pour montrer où se trouve le point de posé 101 et éventuellement pour fournir une indication de hauteur et de roulis de l'aéronef 1.

A cet effet, le symbole de désignation 30 peut s'étendre en élévation du sol 25 vers le haut, en partant d'une zone inférieure 31 reposant sur le sol 25 jusqu'à une zone sommitale 32 positionnée à une hauteur de sommet H1 par rapport au sol 25. La zone inférieure 31 peut être réduite à un point positionné au point de posé 101.

La surface de la zone sommitale 32 peut être calculée par le calculateur embarqué 2 en fonction de la précision du système de positionnement par satellites 7 par exemple. La zone sommitale 32 peut être positionnée à une hauteur de sommet H1 du sol 25. Cette hauteur de sommet H1 peut par exemple être fixe le long de l'approche et égale à une hauteur prédéterminée ou à une hauteur de l'aéronef 1 évaluée avec le senseur de hauteur 152 au moment de la désignation du point de posé 101.

Par exemple, le symbole de désignation 30 est un cône 33 dénommé « inversé » par commodité. Dès lors, ce cône 33 s'étend de bas en haut d'un sommet 34 du cône 33 formant la zone inférieure 31 jusqu'à une base 35 formant la zone sommitale 32.

Le symbole de désignation 30, représenté en deux ou trois dimensions, peut être affiché selon une charte graphique de référence. Cette charte graphique de référence peut consister à utiliser des traits continus fins uniquement.

Par ailleurs, à chaque instant, le symbole de désignation 30 peut comprendre un trait de hauteur 36 mobile en fonction de la hauteur de l'aéronef 1. Lorsque le symbole de désignation 30 présente une forme de cône à base circulaire, le trait de hauteur 36 peut avoir une forme de cercle ou de barre et correspond à une intersection entre le cône 33 et un plan parallèle à la base.

Ce trait de hauteur 36 peut être affiché selon une charte graphique complémentaire différente de la charte graphique de référence. Cette charte graphique complémentaire peut consister par exemple à utiliser uniquement des traits continus épais pour bien distinguer le trait de hauteur 36 des autres traits du symbole de désignation 30.

Par ailleurs, le calculateur embarqué 2 peut positionner le trait de hauteur 36 entre la zone inférieure 31 et la zone sommitale 32 et à la hauteur courante de l'aéronef 1 tant que la hauteur courante de l'aéronef 1 est inférieure à la hauteur de sommet H1. En revanche et conformément à la représentation de la figure 3, le trait de hauteur 36 est positionné au niveau de la zone sommitale 32 du symbole de désignation 30 tant que la hauteur de l'aéronef 1 est supérieure ou égale à la hauteur de sommet H1.

Eventuellement, le trait de hauteur 36 peut apparaitre seulement lorsque la distance horizontale séparant l'aéronef 1 du point de posé 101 est inférieure ou égale à un seuil de distance prédéterminé.

Selon une possibilité, la valeur de la distance horizontale DR peut être inscrite à proximité, voire au-dessus, du symbole de désignation 30.

Dès lors, le symbole de désignation 30 fournit, quelles que soient les conditions de visibilité, non seulement la position conforme du point de posé 101 à atteindre, mais également une information de hauteur de l'aéronef 1 relativement au terrain, voire une information d'attitude de l'aéronef 1 relativement au terrain illustrée par la suite.

Par ailleurs, le calculateur embarqué 2 peut déterminer l'orientation du vecteur vitesse 105 de l'aéronef 1 par des méthodes usuelles. Durant une étape d'affichage, le calculateur embarqué 2 peut commander l'afficheur 20 pour afficher un symbole 96 représentant ce vecteur vitesse 105 au moins tant que l'aéronef 1 présente une vitesse air supérieure à un seuil prédéterminé. A basse vitesse, à savoir en dessous du seuil prédéterminé, le calcul de la vitesse air peut être relativement peu précis. Par suite, le symbole 96 peut ne pas être affiché en dessous d'une vitesse seuil d'avancement pour limiter les informations affichées afin de faciliter le travail d'analyse du pilote.

Par ailleurs, l'afficheur 20 peut être commandé pour afficher des données usuelles, telles qu'un cap 89, une échelle de radio-altitude 90, un variomètre 850, ...

En référence à la figure 4, le procédé peut comporter une détermination, durant une étape STPP et avec le calculateur embarqué 2 d'au moins deux portes 88, 86, 87 de passage centrées chacune sur une pente 85 et matérialisant chacune une porte dans laquelle l'aéronef 1 peut passer pour rejoindre le point de posé en suivant ladite pente 85.

En sollicitant par exemple une commande manuelle ou vocale ou encore tactile ou autres, le calculateur embarqué 2 peut calculer une pente d'une trajectoire dite par commodité « de rejointe » pour rejoindre la zone cible 100.

Selon une possibilité, le procédé comporte une détermination du sens du vent avec le senseur de vent 29, la pente 85 étant alors positionnée automatiquement par le calculateur embarqué 2 de manière être face au vent. Selon une autre possibilité, la pente 85 est déterminée à partir de la position courante de l'aéronef 1, ou selon un cap paramétré avec une interface non illustrée, ou selon un cap établi par un calculateur 155 du système avionique et par exemple un générateur de trajectoire pour éviter d'éventuels obstacles connus via la base de données de terrain 153 embarquée, ou détectés par un système actif de détections d'obstacles, ou reçus par liaison de données et/ou pour éviter une zone dangereuse. L'aéronef 1 peut éventuellement comporter une interface permettant de choisir l'option souhaitée dans une liste comprenant plusieurs des possibilités précédentes.

La pente 85 peut être dirigée vers le point de posé 101. Alternativement, la pente 85 peut être dirigée vers un point situé au-dessus de ce point de posé 101, à savoir à la verticale du point de posé, par exemple à une hauteur fixe prédéterminée ou paramétrée voire calculée. L'aéronef 1 peut éventuellement comporter une interface permettant de choisir l'option souhaitée dans une liste comprenant plusieurs des possibilités précédentes.

Le pilote peut renouveler plusieurs fois cette étape, une nouvelle trajectoire de rejointe étant calculée à chaque itération. Eventuellement, le pilote n'est pas tenu de suivre cette trajectoire de rejointe, la trajectoire de rejointe étant illustrée à titre informatif uniquement pour aider si besoin le pilote.

Le calculateur embarqué 2 peut alors calculer la pente 85 illustrant une trajectoire conseillée, à l'aide d'une pente mémorisée, ou peut utiliser un angle de pente paramétré par le pilote.

Dès lors, le calculateur embarqué 2 peut calculer la position d'au moins deux portes de passages 86, 87, 88, et en particulier trois portes de passage selon cet exemple. Ces portes de passage 86, 87, 88 sont par exemple données à titre indicatif. Dès lors, le système ne génère pas une alarme si une ou plusieurs portes de passage 86, 87, 88 n'ont pas été franchies.

Chaque porte de passage 86, 87, 88 peut être positionnée en fonction d'une distance mémorisée séparant horizontalement la porte de passage 86, 87, 88 et le point de posé 101, et peut être centrée sur la pente 85 calculée, par exemple. Dès lors, le calculateur embarqué 2 peut transmettre un signal à l'afficheur 20 pour afficher chaque section des portes de passage 86, 87, 88 située à un emplacement présent dans le champ de vision 110.

Dans le cas d'une phase d'approche nominale suivant la trajectoire calculée illustrée sur la figure 4, les trois portes de passage 86, 87, 88 sont imbriquées les unes dans les autres.

Pour suivre, s'il le souhaite, cette trajectoire aisément, le pilote doit seulement piloter l'aéronef 1 afin que le symbole 96 soit positionné dans la porte active.

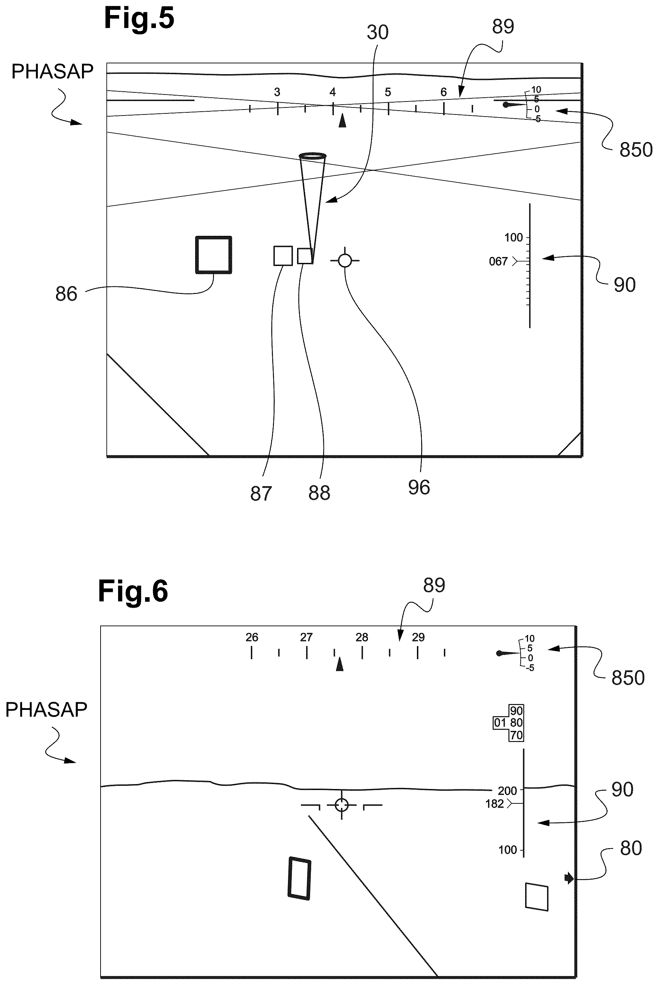

En référence à la figure 5, la forme des divers symboles affichés, et notamment des portes de passage 86, 87, 88, est recalculée par le calculateur embarqué 2 en fonction du positionnement relatif de l'axe de visée AX1 et de ces symboles.

A titre d'exemple et en présence d'un aéronef 1 ayant un rotor principal 21, la taille de ces portes de passage 86, 87, 88 peut être fonction du diamètre du disque rotor du rotor principal 21. Ces portes de passage 86, 87, 88 peuvent être soit de tailles fixes et identiques, soit de tailles décroissantes.

En référence à la figure 6, si le point de posé 101 ne se trouve plus dans le champ de vision 110, le calculateur embarqué 2 peut calculer une direction selon laquelle se trouve le point de posé 101 et peut transmettre un signal à l'afficheur 20 pour afficher une flèche 80 dirigée vers le point de posé 101.

En référence à la figure 7, au moins lorsque l'aéronef 1 est situé à une distance horizontal DR inférieure à un seuil de transition dénommé « deuxième seuil S2 » par commodité, une phase finale PHASSTA peut débuter. Le calculateur embarqué 2 peut déterminer, durant une étape STPAIRE, la position et la forme de l'aire d'atterrissage principale virtuelle 40 et transmet un signal à l'afficheur 20 pour afficher sur l'afficheur 20 chaque partie virtuelle 49 de l'aire d'atterrissage principale virtuelle 40 située à un emplacement présent dans le champ de vision 110.

A titre d'exemple, le deuxième seuil S2 peut être une distance fixe mémorisée, par exemple de l'ordre de 200 mètres. Selon un autre exemple, le deuxième seuil S2 peut être variable, par exemple en fonction de la vitesse sol ou air de l'aéronef 1 et/ou d'un temps de vol estimé pour atteindre le point de posé 101. Eventuellement, la porte 88 la plus proche du point de posé 101 se situe à une distance du point de posé 101 égale au deuxième seuil S2.

Eventuellement, l'aire d'atterrissage principale virtuelle 40 apparait progressivement, sous la forme d'un fondu.

Selon la figure 7, le symbole de désignation 30 peut être conservé. En outre, la figure 7 illustre le fait que le trait de hauteur 36 se déplace dans le symbole de désignation 30 en se rapprochant du point de posé 101 à mesure que l'aéronef 1 se rapproche du sol. Un ou des symboles d'alignement 400 sont en outre placés dans le plan vertical PVERT contenant la pente 85, et sont affichés de manière à être distingués visuellement des symboles radiaux 401. De plus, l'orientation de la forme centrale 500 en H fournit aussi au pilote l'orientation de l'axe d'arrivée prédéterminé par le calculateur embarqué 2. Sur la figure 7, l'axe courant est correct.

Selon la figure 8, le symbole de désignation 30 peut éventuellement disparaitre sur ordre du calculateur embarqué 2.

Indépendamment de cet aspect, le pilote peut réduire la vitesse de déplacement de l'aéronef 1 à proximité du sol. Dès lors, le symbole 96 peut disparaitre. Le pilotage, très proche du point de posé 101 peut s'effectuer uniquement via les symboles affichés, tracés artificiellement éventuellement en superposition du monde réel ou d'une représentation du monde réel, ces symboles se déplaçant et étant modifiés suivant la position relative de l'aéronef 1 par rapport au point de posé 101.

Indépendamment de cet aspect, le procédé d'aide au pilotage peut comporter une phase d'aide illustrée sur la figure 8.

Eventuellement, le procédé comporte une activation de cette phase d'aide, durant une étape préalable STP0 de la phase d'aide, par un pilote sollicitant l'interface homme-machine d'activation 28. Selon cette variante, la phase d'aide est mise en œuvre uniquement tant que la phase d'aide est activée. Si le pilote sollicite à nouveau l'interface homme-machine d'activation 28 ou une interface dédiée, la phase d'aide est interrompue.

Indépendamment de cette possibilité, la phase d'aide comprend une détermination, lors d'une étape STP1 et avec le calculateur embarqué 2 d'un angle conseillé thêta configuré pour assister un pilote à converger avec l'aéronef vers une vitesse cible vp prédéterminée.

Cet angle conseillé thêta peut être un angle d'assiette en tangage. En outre, le calculateur embarqué 2, détermine cet angle thêta à l'aide d'une loi de calcul prenant en compte la vitesse cible vp et la traînée aérodynamique courante fx estimée.

Par exemple, lorsque l'aéronef 1 est un hélicoptère comprenant un rotor principal 21 muni de pales 19 participant à la sustentation de cet aéronef 1, le procédé peut comporter une détermination STP1.1 de la traînée aérodynamique courante fx estimée en fonction d'une composante de pas collectif d'un angle de pas des pales 19.

Par exemple, cette étape de détermination STP1.1 comporte une détermination, avec le calculateur embarqué 2 d'un ordre de pas collectif généré par l'interface homme machine de pas collectif 15. Eventuellement, le calculateur embarqué 2 évalue cet ordre en décodant un signal analogique ou numérique émis par le senseur de pas collectif 151.

Dès lors, le calculateur embarqué 2 évalue la traînée aérodynamique courante fx estimée en fonction de l'ordre de pas et d'une loi de paramétrage.

Dès lors, la loi de calcul peut comporter une loi principale appliquée par le calculateur embarqué 2 donnant un coefficient aérodynamique de trainée cx.

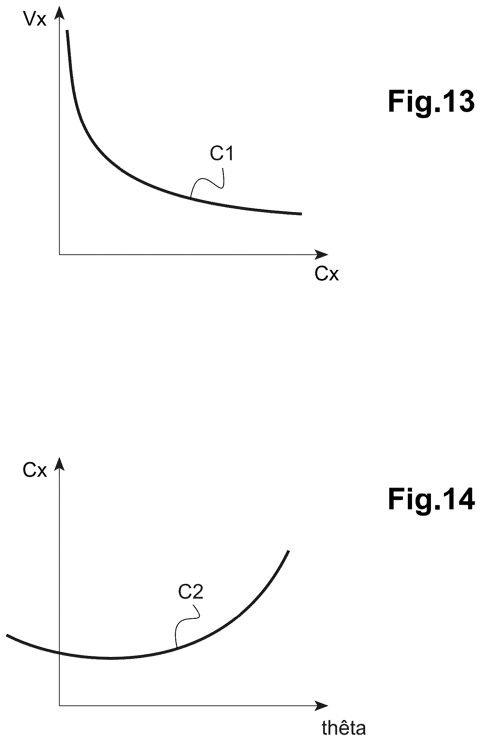

La figure 13 présente un diagramme comprenant une courbe C1 donnant la vitesse souhaitée en fonction du coefficient aérodynamique de trainée cx pour une trainée aérodynamique donnée.

Par exemple, ladite loi principale est : $cx = \left(2*fx\right) / \left(vp*vp*rho*S\right)$ où « cx » représente ledit coefficient de traînée, « vp » représente la vitesse cible, « rho » représente la masse volumique évaluée avec le senseur de masse volumique 26, « S » représente une surface prédéterminée, « fx » représente la traînée aérodynamique courante estimée, « = » représente le signe de l'égalité, « * » représente le signe de la multiplication, « / » représente le signe de la division.

Dès lors, la loi de calcul comporte une loi secondaire. La loi secondaire comprend une équation ou un tableau de valeurs par exemple, illustrant la courbe C2 présentée sur la figure 14, et appliquée par le calculateur embarqué 2, cette loi secondaire donnant le coefficient aérodynamique de trainée cx calculé précédemment en fonction d'un angle d'incidence de l'aéronef 1. En fonction de la variante, l'angle conseillé est alors égal, selon une loi tertiaire, à l'angle d'incidence de l'aéronef 1, ou est égal à l'angle d'incidence plus un angle de référence prédéterminé.

Indépendamment de cet aspect, la phase d'aide comporte un affichage, durant une étape STP2 et sur l'afficheur 20, par rapport à une échelle 75 graduée en angle, d'un premier symbole d'assistance 76 porteur de l'angle conseillé thêta, à savoir positionné sur l'échelle pour pointer l'angle conseillé thêta et d'un deuxième symbole d'assistance 77 porteur d'un angle courant angcur, à savoir positionné sur l'échelle pour pointer angle courant angcur. Cet angle courant angcur peut être évalué avec le senseur d'inclinaison 27.

La forme du premier symbole d'assistance 76 peut être prédéterminée. Alternativement, le procédé peut comporter un calcul, durant une étape STP1.2 et avec le calculateur embarqué 2 d'une dimension, et par exemple de la hauteur HGT, du premier symbole d'assistance 76 en fonction d'une précision de calcul. Par exemple, le calculateur embarqué 2 applique une loi de dimensionnement mémorisée donnant ladite précision en fonction de la vitesse du vent mesurée par le senseur de vent 29.

Eventuellement, cet affichage STP2 est réalisé seulement tant que l'aéronef 1 est situé à une distance horizontale DR du point de posé 101 comprise entre une limite de distance maximale LDMAX et une limite de distance minimale LDMIN.

Selon une variante, ladite limite de distance minimale LDMIN est égale à 0 mètre. Selon une autre variante, ladite limite de distance minimale LDMIN est égale au rayon maximal Rmax. Eventuellement, un pilote peut choisir la variante souhaitée avec une interface de l'aéronef 1.

Eventuellement, ladite limite de distance maximale LDMAX est égale au rayon R1 du cylindre 93 associé à la porte de passage 88 qui est la plus proche du point de posé 101.

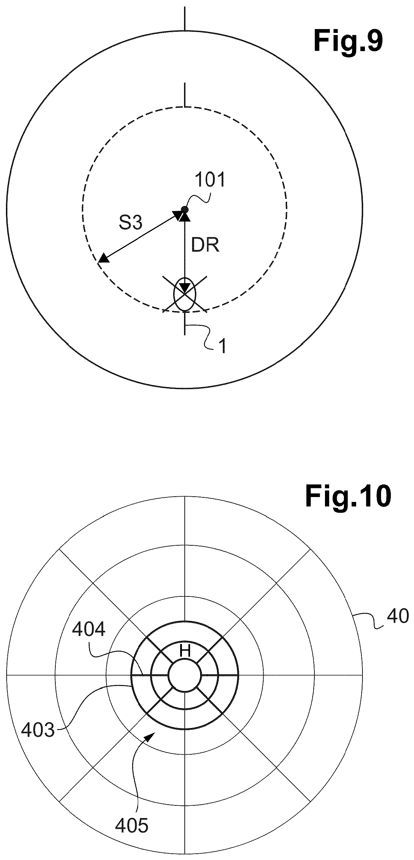

Par ailleurs et en référence à la figure 9, lorsque la distance horizontale DR est inférieure à un seuil dénommé « troisième seuil S3 » par commodité, le calculateur embarqué 2 peut calculer et requérir l'affichage d'une forme complémentaire 405. Le troisième seuil S3 est inférieur au deuxième seuil S2. A ce stade, l'aéronef 1 peut se trouver au-dessus de la zone couverte par l'aire d'atterrissage principale virtuelle 40.

En référence à la figure 10, cette forme complémentaire 405 peut être une aire d'atterrissage complémentaire virtuelle 400 disposée au centre de l'aire d'atterrissage principale virtuelle 40. A l'instar de l'aire d'atterrissage principale virtuelle 40, l'aire d'atterrissage complémentaire virtuelle 400 peut comprendre des lignes 403 et des radiales 404. La forme en H peut être conservée, mais déplacée.

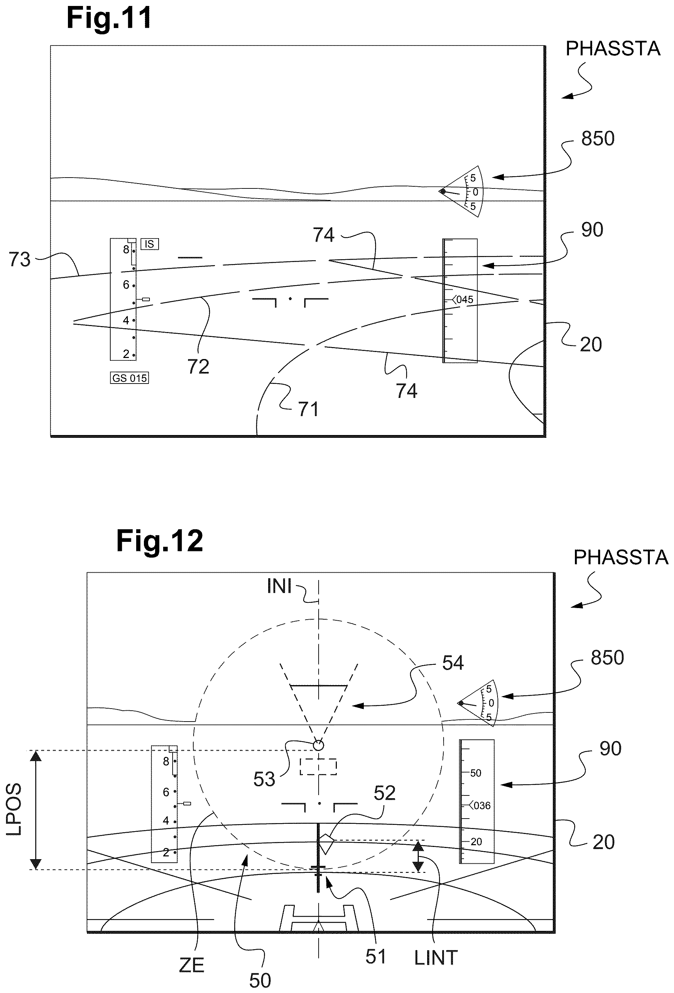

En référence à la figure 11, lorsque l'aire d'atterrissage principale virtuelle 40 n'apparait plus dans le champ de vision 110 et au moins lorsque l'aéronef 1 est situé à une distance horizontale inférieure au deuxième seuil S2 du point de posé 101, le calculateur embarqué 2 peut calculer la forme et l'emplacement d'un symbole secondaire 71, 72, 73, 74 et transmet un signal à l'afficheur 20 pour afficher ce symbole secondaire 71, 72, 73, 74 dans le champ de vision 110. Le symbole secondaire 71, 72, 73, 74 n'apparait éventuellement que lorsque l'aire d'atterrissage principale virtuelle 40 a disparu ou lorsque l'aire d'atterrissage principale virtuelle 40 n'apparait plus dans le champ de vision réduit éventuel.

Pour aider le pilote à savoir où se trouve l'aéronef 1 en présence d'une visibilité dégradée, le calculateur embarqué 2 calcule en effet l'emplacement d'au moins trois symboles secondaires 71, 72, 73 sous la forme de lignes fermées centrées sur le point de posé 101 et d'au moins un symbole secondaire 74 sous la forme d'un symbole secondaire radial et transmet un signal à l'afficheur 20 pour afficher chaque partie des lignes secondaires 71, 72, 73 et du ou des symboles secondaires radiaux 74 visibles dans le champ de vision 110.

Les lignes secondaires 71, 72, 73 et les symboles secondaires radiaux 74 peuvent être affichés selon une charte graphique additionnelle pour avoir une représentation graphique visuellement différente d'une représentation graphique respectivement des lignes principales 41, 42, 43 et des symboles principaux 45.

Les lignes secondaires 71, 72, 73 sont par exemple positionnées à l'altitude du sol autour des lignes principales 41, 42, 43 et à des distances prédéterminées du point de posé 101. Chaque symbole secondaire radial 74 converge vers le point de posé 101.

Par ailleurs, le procédé peut comporter une phase d'aide à la mise en vol stationnaire à proximité du point de posé 101.

Ainsi, lorsque le calculateur embarqué 2 détecte que la distance horizontale DR est inférieure à un premier seuil S1, le calculateur embarqué 2 détermine et requiert l'affichage d'une représentation 50 en deux dimensions dudit aéronef 1 par rapport au point de posé 101 en vue de dessus ou de dessous. Le premier seuil S1 est inférieur au deuxième seuil S2 et supérieur au troisième seuil S3.

A titre d'exemple, le premier seuil S1 peut être une distance fixe mémorisée, et par exemple égale à 60 mètres et/ou à un rayon Rmax du plus grand cercle de l'aire d'atterrissage principale virtuelle 40. Selon un autre exemple, le premier seuil S1 peut être variable, par exemple en fonction de la vitesse sol ou air de l'aéronef 1 et/ou d'un temps de vol estimé pour atteindre le point de posé 101.

Eventuellement, le premier symbole d'assistance et le deuxième symbole d'assistance sont toujours ou ne sont plus affichés selon la variante.

Selon l'exemple de la figure 12, la représentation 50 peut être contenue dans un cercle ZE de l'afficheur 20 rendu partiellement opaque ou semi-transparent. La couleur des éléments situés sous la représentation 50 peut alors être atténuée. Ce cercle ZE de l'afficheur 20 peut être disposé sur et au moins partiellement au-dessus de la partie affichée de l'aire d'atterrissage principale virtuelle 40, voire de l'aire d'atterrissage complémentaire virtuelle 400 éventuelle. L'axe sud/nord du cercle ZE peut correspondre à une direction de référence INI. La direction de référence INI peut correspondre à la direction d'alignement initiale de la pente 85. La direction de référence INI peut être réinitialisée par un pilote à l'aide d'une interface homme-machine.

Ladite représentation 50 comprend divers symboles dont les positions sur l'afficheur 20, voire les formes, sont déterminées par le calculateur embarqué 2. Ces symboles comprennent un symbole d'aéronef 51 représentant ledit aéronef 1, un symbole cible 53 représentant le point de posé 101 et éventuellement de taille variable, un symbole de déplacement 52 image du déplacement de l'aéronef 1 par rapport au point de posé 101 ainsi qu'un symbole en élévation 54 illustrant la hauteur de l'aéronef 1 par rapport au point de posé 101.

Par défaut, le symbole cible 53 ou le symbole d'aéronef 51 est positionné à un emplacement prédéterminé, par exemple au centre du cercle ZE de l'afficheur 20.

Eventuellement, l'enseignement du brevet FR 3 134 176 est applicable pour afficher la représentation 50.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention défini par les revendications.

## Revendications

1. Procédé d'aide au pilotage pour atterrir sur une zone cible (100) centrée sur un point de posé (101) avec un aéronef (1),
**caractérisé en ce que** le procédé comporte les étapes suivantes :
- détermination avec un calculateur embarqué (2) d'une pente (85) d'approche dirigée vers la zone cible (100),
- détermination avec le calculateur embarqué (2) d'une aire d'atterrissage principale virtuelle (40) positionnée, au sein d'une représentation du monde réel, sur la zone cible (100), ladite aire d'atterrissage principale virtuelle (40) comprenant au moins quatre symboles principaux (45) convergeant vers ledit point de posé (101) les symboles principaux (45) étant orientés radialement par rapport au point de posé (101), un ou deux symboles principaux (45) situés dans un plan vertical (PVT) contenant ladite pente (85) formant respectivement un ou deux symboles d'alignement (400), chaque symbole principal (45) ne formant pas un symbole d'alignement (400) étant un symbole radial (401),
- affichage sur un afficheur (20) d'au moins une partie virtuelle (49) de l'aire d'atterrissage principale virtuelle (40), ledit au moins un symbole d'alignement (400) étant affiché selon une première charte graphique, chaque symbole radial (401) étant affiché selon une deuxième charte graphique différente de la première charte graphique.

2. Procédé selon la revendication 1,
**caractérisé en ce que** ledit affichage est réalisé tant que l'aéronef (1) est situé à une distance horizontale (DR) dudit point de posé (101) inférieure à un seuil de transition (S2).

3. Procédé selon l'une quelconque des revendications 1 à 2,
**caractérisé en ce que** ledit au moins un symbole d'alignement (400) présente selon la première charte graphique une première épaisseur (ep1), chaque symbole radial (401) ayant selon la deuxième charte graphique une deuxième épaisseur (ep2) différente de la première épaisseur (ep1).

4. Procédé selon la revendication 3,
**caractérisé en ce que** la première épaisseur (ep1) est supérieure à la deuxième épaisseur (ep2).

5. Procédé selon l'une quelconque des revendications 3 à 4,
**caractérisé en ce que** la première épaisseur (ep1) est égale à trois fois la deuxième épaisseur (ep2).

6. Procédé selon l'une quelconque des revendications 1 à 5,
**caractérisé en ce que** ledit au moins un symbole d'alignement (400) présente selon la première charte graphique un premier style de trait, chaque symbole radial (401) ayant selon la deuxième charte graphique un deuxième style de trait différent du premier style de trait.

7. Procédé selon la revendication 6,
**caractérisé en ce que** le premier style de trait et le deuxième style de trait sont à choisir dans une liste comprenant : un trait continu, un trait discontinu, des pointillés.

8. Procédé selon l'une quelconque des revendications 1 à 7,
**caractérisé en ce que** ledit au moins un symbole d'alignement (400) présente selon la première charte graphique une première couleur, chaque symbole radial (401) ayant selon la deuxième charte graphique une deuxième couleur différente de la première couleur.

9. Procédé selon l'une quelconque des revendications 1 à 8,
**caractérisé en ce que** le procédé comporte une détermination du sens du vent, ladite pente (85) étant disposée face au vent.

10. Procédé selon l'une quelconque des revendications 1 à 8,
**caractérisé en ce que** le procédé comporte une détermination d'au moins un danger avec au moins une base de données de terrain (153) ou un système de détection d'obstacles (154), ladite pente (85) étant disposée pour éviter ledit danger.

11. Procédé selon l'une quelconque des revendications 1 à 10,
**caractérisé en ce que** ladite pente (85) est dirigée vers le point de posé (101).

12. Procédé selon l'une quelconque des revendications 1 à 11,
**caractérisé en ce que** ladite pente (85) est dirigée vers un point situé au-dessus du point de posé (101).

13. Aéronef (1) muni d'un afficheur (20) et d'un calculateur embarqué (2),
**caractérisé en ce que** ledit afficheur (20) et ledit calculateur embarqué (2) sont configurés pour appliquer le procédé selon l'une quelconque des revendications 1 à 12, ledit calculateur embarqué (2) étant configuré pour déterminer ladite pente (85) et l'aire d'atterrissage principale virtuelle (40) et ledit afficheur (20) étant configuré pour afficher ladite au moins une partie virtuelle (49).
